# EUROPÄISCHE PATENTSCHRIFT

(11) **EP 0 848 804 B1**
(45) Veröffentlichungstag und Bekanntmachung des Hinweises auf die Patenterteilung: **22.09.2004**
(21) Anmeldenummer: 96924814.5
(22) Anmeldetag: 29.06.1996
(51) Int. Cl.: G01D 5/245, B62D 15/02

(54) **LENKWINKELSENSOR MIT ABSOLUTWERTMESSUNG**
STEERING-ANGLE SENSOR GIVING ABSOLUTE VALUES
CAPTEUR D'ANGLE ABSOLU DE BRAQUAGE

(30) Priorität: 07.09.1995 DE 19532903
(43) Veröffentlichungstag der Anmeldung: 24.06.1998
(73) Patentinhaber: Valeo Schalter und Sensoren GmbH, 74321 Bietigheim-Bissingen (DE)
(72) Erfinder: KOFINK, Peter, D-74379 Ingersheim (DE); TRAUB, Harald, D-74211 Leingarten (DE)
(74) Vertreter: Dreiss, Fuhlendorf, Steimle & Becker
(86) Internationale Anmeldenummer: PCT/EP1996/002846
(87) Internationale Veröffentlichungsnummer: WO 1997/009588

(56) Entgegenhaltungen:
- EP-A- 0 557 265
- DE-A- 4 009 007
- NTIS TECH NOTES, Februar 1990, SPRINGFIELD, VA US, Seite 161 XP000103872 "rapidly indexing incremantal-angle encoder"

## Beschreibung

Die Erfindung betrifft einen Lenkwinkelsensor mit den Merkmalen des Oberbegriffs des Anspruchs 1.

Kraftfahrzeuge werden immer mehr mit Hilfen ausgerüstet, die ein falsches Fahrverhalten der Bedienungsperson korrigieren bzw. verhindern sollen. So sind beispielsweise Maßnahmen vorgesehen, die ein Blockieren der gebremsten Räder verhindern. Zusätzliche Maßnahmen bestehen darin, dann für Hilfe zu sorgen, wenn ein Fahrzeug infolge zu enger Kurvenfahrt aus der Spur zu geraten droht. Um bei dieser sogenannten Giermomentenregelung Korrekturmomente anbringen zu können, welche das Fahrzeug in der Spur halten, ist es für die Regelung notwendig, den Bogen zu kennen, welchen die Bedienungsperson mit dem Fahrzeug fahren möchte. Dies geschieht mit Hilfe eines Lenkwinkelsensors. Weiterhin ist zu beachten, dass bei der Einschaltung des Systems, also der Einschaltung des Versorgungsstroms mit Hilfe des Zündschlüssels, die Winkelstellung der Räder noch nicht bekannt ist. Es genügt also nicht, beim Einschalten des Systems die jeweiligen inkrementalen Winkeländerungen zu addieren bzw. zu subtrahieren, um die tatsächliche Winkelstellung der Räder zu kennen. Vielmehr muss ständig der Absolutwert gemessen werden, um der Regelung eine eindeutige Information auf die tatsächliche Winkelstellung der Räder geben zu können.

Es ist bekannt, dass die genannten inkrementalen Lenkwinkelsensoren, die regelmäßig mit zwei Sensoren aufgebaut sind, allein keinen absoluten Lenkwinkel abgeben können. Nur durch einen zusätzlichen dritten Sensor (Nullpunktsensor) kann nach einer Drehbewegung um mindestens 360 Grad der kreisförmigen Abtastspur ein absoluter Lenkwinkel angegeben werden. Das resultiert daher, dass auf dieser Absolutspur eine Markierung vorgesehen ist, welche den Nullpunkt festlegt und von der aus dann der gemessene Absolutwert berechnet werden kann.

Das hierdurch erreichte Referenzsignal wird erst wieder nach einer Drehbewegung von 360 Grad bestätigt. Auch für den Fall, dass der Drehwinkel des Lenkrades sehr viel größer ist als der Drehwinkel des zugeordneten Rades, ist das beschriebene Messverfahren zur Messung des Absolutwertes der Winkelstellung der Räder für einige Anwendungen im Kraftfahrzeug nicht ausreichend.

Aus der NTIS TECH NOTES, Februar 1990, SPRINGFIELD, VA USA, Seite 161, "Rapidly-Indexing Incremental-Angle Encoder" (XP000103872) ist eine Vorrichtung bekannt, die einen Drehwinkelsensor aufweist. Hierfür sind zwei konzentrische Codespuren vorgesehen, wobei die eine Codespur mit gleichmäßig verteilt angeordneten Hell-Dunkel-Stellen aufweist (Inkrementalspur), wohingegen die andere Codespur Hell-Dunkel-Stellen besitzt, deren Breite von einer Nullposition der Vorrichtung ausgehend stetig zunimmt (Absolutspur). Wird eine derartige Vorrichtung als Lenkwinkelsensor verwendet, dann können die Lenkwinkel bei größeren Geschwindigkeiten, bei denen der Lenkausschlag relativ gering ist, nur unzureichend gut ermittelt werden, da der Lenkausschlag unter Umständen nicht groß genug ist, um ein Absolutintervall zu überstreichen.

Die Erfindung liegt daher die Aufgabe zugrunde, einen Sensor bereit zu stellen, mit dem auf einfache Art und Weise auch sehr kleine Lenkausschläge bei hoher Geschwindigkeit erfasst werden können.

Diese Aufgabe wird mit einem Lenkwinkelsensor gelöst, der die Merkmale des Anspruchs 1 aufweist.

Beim erfindungsgemäßen Lenkwinkelsensor werden also, wie beim Stand der Technik, mit Hilfe von nur zwei Informationsspuren der Absolutwert des Lenkwinkels bestimmt. Dabei dient die erste Spur dazu, die auf der zweiten Spur erkennbaren Absolutwerte vermessen zu können. Für die Giermomentenregelung, die besonders bei großen Geschwindigkeiten wichtig ist, wobei in diesem Geschwindigkeitsbereich der von der Bedienungsperson eingestellte Lenkwinkel eher klein ist, kann der Absolutwinkel des Lenkrades schnell angeben werden. Da die einzelnen Zähne auf der zweiten Spur (Absolutspur) dem jeweils gemessenen Absolutwert des Winkels entsprechende unterschiedliche Zahnbreiten haben müssen, legt man die Zähne mit geringer Breite in den Bereich der Absolutspur, welcher in der Nähe des absoluten Nullwertes dieser Spur liegt.

Um eine größere Auflösung bei der Vermessung der über die erste Spur gemessenen Inkrementalwerte zu erreichen, empfiehlt sich in vorteilhafter Weiterbildung der Erfindung die Merkmalskombination nach Anspruch 2. Danach wird die erste Spur (Inkrementalspur) durch zwei Sensoren vermessen, die die in gleichen Abständen angeordneten Flanken der vorzugsweise rechteckförmigen Zähne auf der ersten Spur abtasten. Dabei haben die Zähne und die zugehörigen Lücken die gleiche Breite. Gibt man den Abstand zweier ansteigender Flanken mit 360 Grad an und damit den Abstand zweier hintereinanderkommender Flanken mit 180 Grad, so sollen gemäß Anspruch 2 die beiden Sensoren im Abstand von 90 Grad hintereinander angeordnet sein. Hierdurch ist es möglich, durch die beiden auf die erste Spur gerichtete Sensoren zwei um 90 Grad versetzte Signale zu erzeugen, von denen ein Signal bei Drehrichtungsumkehr der Spur einen Phasensprung von 180 Grad aufweist, wodurch auch die Drehrichtung eindeutig erfasst werden kann.

Nach einer vorteilhaften Weiterbildung der Erfindung genügt zur Absolutwertbestimmung ein einziger Detektor, welcher die zweite Spur abtastet, durch welchen der Absolutwert angezeigt ist. Allerdings kann es sich aus Gründen der größeren Sicherheit und der größeren Genauigkeit empfehlen, gemäß Anspruch 4 noch einen vierten Detektor vorzusehen, welcher die zweite Spur abtastet.

Zur konkreten Angabe des Absolutwertes des Lenkwinkels empfiehlt sich eine Auswerteeinrichtung entsprechend den Merkmalen nach Anspruch 5. Im Prinzip wird dabei mit Hilfe der Zähne auf der ersten Spur der Flankenabstand auf der zweiten Spur vermessen. Umgekehrt ist es wichtig für die Erfindung, dass der Abstand der auf der zweiten Spur nacheinander erscheinenden Flanken einen eindeutigen Bezug zu dem Absolutwert des zu messenden Lenkwinkels hat. Damit ist anders ausgedrückt die Breite eines Zahns auf der zweiten Spur ein Maß für den Lenkwinkel der Räder, welchen diese bei der Vermessung dieses Zahnes einnehmen.

Um aufgrund der vermessenen Zahnbreite einfach den konkreten Winkelwert angeben zu können, empfiehlt sich in Weiterbildung der Erfindung die Merkmalskombination nach Anspruch 6. Hierbei dient die Zahnbreite als Eingangswert in eine Tabelle, deren korrespondierender Ausgangswert den Winkelwert angibt.

Anstatt ausschließlich die Breite eines Zahns auf der Absolutspur zu vermessen, wobei die Messdauer je nach Zahnbreite unterschiedlich lang ist, gibt die Merkmalskombination nach Anspruch 8 einen vorteilhaft weitergebildeten Sensor an, bei welchem die vermessene Bogenlänge der zweiten Spur zur Bestimmung des Absolutwertes immer gleich lang ist. Durch die Inkrementalspur wird anders ausgedrückt, die Breite eines Bitmusters auf der Absolutspur vorgegeben, wobei durch die einzelnen Zähne auf der Inkrementalspur 1 die Lage der einzelnen Bits auf der Codespur 2 festgelegt wird. Somit legt die Inkrementalspur fest, an welchen Stellen der Codespur der dort gemessene Amplitudenwert als Bit-Wert eines Codes aufzufassen ist.

Um auch hier eine einfache Umformung des gemessenen Code-Werts in einen konkreten Winkelwert zu erreichen, empfiehlt sich in Weiterbildung die Merkmalskombination nach Anspruch 9.

Um bei einem derartigen Verfahren eine besonders dichte Folge von Absolutmesswerten zu erhalten, empfiehlt sich in Weiterbildung der Erfindung die Merkmalskombination nach Anspruch 10. Diese Maßnahme besteht im Prinzip darin, dass unabhängig von dem Startpunkt auf der zweiten Spur keine Bit-Folge (beispielsweise je 8 Bit) der anderen gleicht. Dieses Verfahren ist an sich bekannt (PWM-Codierung), hat sich aber in Verbindung mit dem vorliegenden Sensor als besonders wirkungsvoll und zweckmäßig erwiesen.

Als besonders vorteilhaft für die Bit-Codierung gemäß Anspruch 8 und folgende Ansprüche hat sich die Merkmalskombination nach Anspruch 11 erwiesen. Durch die Verwendung von zwei Sensoren gegenüber der ersten Spur lässt sich die Breite von zwei Zähnen einschließlich der zugehörigen Lücken in acht Zeitabschnitte aufteilen, denen 8 Bit eines 8 Bit-Codes auf der zweiten Spur zugeordnet sind. Es ergibt sich somit ein sehr einfacher mechanischer Aufbau der Sensorspuren.

Eine besonders einfache mechanische Konstruktion ergibt sich durch die Merkmalskombination nach Anspruch 12. Hierbei sind die Spuren zwei konzentrisch zueinander angeordnete kreisförmige, mit Zähnen versehene Vorsprünge. Ein derartiger Aufbau erfordert nur wenig Platz und ist vergleichsweise einfach in Gusstechnik beispielsweise aus Kunststoff herzustellen. Auf diese Weise gestattet er die zusätzliche Aufnahme der Wickelfeder in das Sensorgehäuse, die somit von Umwelteinflüssen.weitgehend abgeschirmt ist. Als Detektoren haben sich besonders optische Detektoren bewährt, bei welchen durch die Zähne der sich drehenden Spuren eine leuchtende Diode gegenüber einem Detektor abgedeckt bzw. durch die Zahnlücken freigegeben wird. Die hierdurch sich ergebenden Helligkeitsänderungen werden durch einen optischen Empfänger vermessen. Es ist aber auch möglich, magnetische Detektoren (Hallsonden) oder auch andere Sensoren zu verwenden.

Die geringen Abmessungen des erfindungsgemäßen Sensors lassen es in vorteilhafter Weiterbildung der Erfindung zu, dass dieser in das Gehäuse eines Lenkstockschalters des Kraftfahrzeugs eingebaut wird, wobei er beispielsweise den Lenkstock des Fahrzeugs umschließen kann und wiederum durch den Lenkstockschalter des Fahrzeugs umschlossen wird.

Zwei Ausführungsbeispiele der Erfindung werden nachfolgend anhand der Zeichnung erläutert.

Darin zeigen:
- Fig. 1: in skizzierter Form die Draufsicht auf zwei konzentrisch zueinander angeordnete Spuren des Sensors;
- Fig. 2: die von den auf die Spuren gerichteten Detektoren abgegebenen elektrischen Signale;
- Fig. 3: die Abwicklung der beiden Spuren in eine Ebene hinsichtlich eines ersten Ausführungsbeispiels;
- Fig. 4: die Auswertung der durch die Abtastung der Spuren erzeugten Impulse bei einem ersten Ausführungsbeispiel; und
- Fig. 5: die Auswertung der durch die Abtastung der Spuren gewonnenen Impulse bei einem zweiten Ausführungsbeispiel.

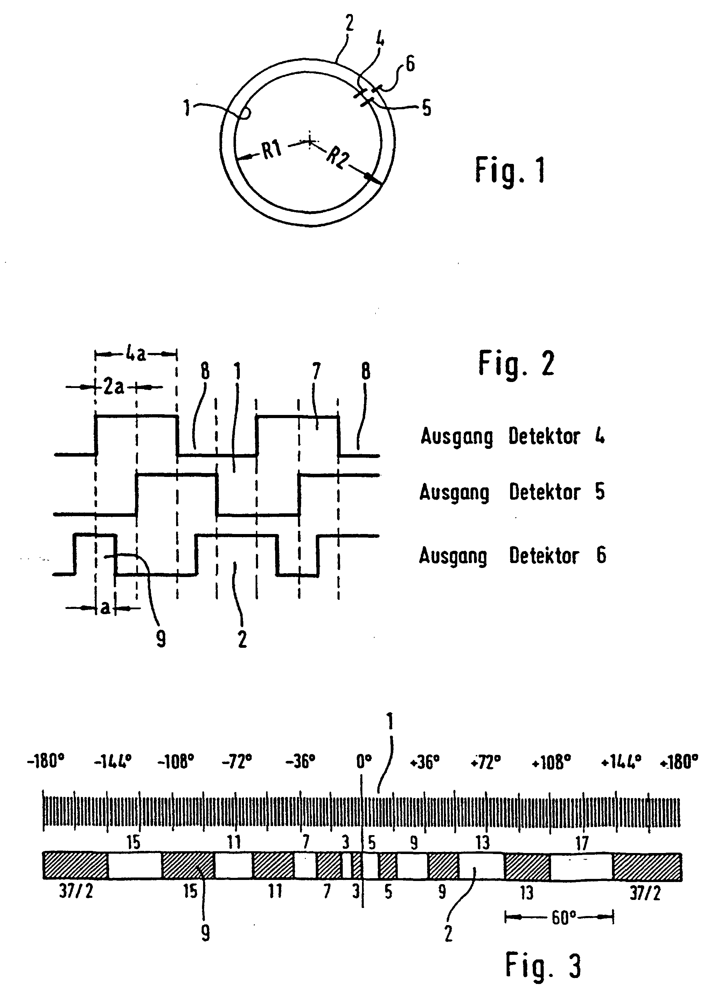

Fig. 1 zeigt in skizzierter Ansicht die Draufsicht auf die beiden zueinander konzentrischen Spuren, wobei die erste Spur (Inkrementalspur) innen liegt und im Abstand von der zweiten Spur umgeben wird.

Mit Hilfe zweier Detektoren 4 und 5 wird die erste Spur 1 abgetastet, während mit Hilfe eines dritten Detektors die zweite Spur 2 (Absolutwertspur) abgetastet wird. Die erste Spur hat den Radius R1, während die zweite Spur den Radius R2 besitzt, so dass beide Spuren im gleichen Abstand zueinander verlaufen. An sich ist es möglich, die Inkrementalspur 1 mit nur einem einzigen Detektor abzutasten. Aus Fig. 2 ist ersichtlich, dass mit Vorteil die rechteckförmigen Zähne 7, an die sich jeweils gleichförmige Lücken 8 anschließen, mit Hilfe zweier Detektoren abgetastet werden. Ordnet man der periodischen Folge von Lücke und Zahn jeweils einen Winkel von 360 Grad zu, so entfällt auf jeden Zahn ein Winkel von 180 Grad und auf jede Lücke ein Winkel von 180 Grad, da Zahn und Lücke die gleiche Breite haben. Ordnet man nun dem Flankenabstand an einem Zahn bzw. einer Lücke einen Winkel von 4a zu, dann beträgt der Winkel a 45 Grad. Die beiden Detektoren 4 und 5 werden nun im Abstand von 90 Grad bzw. 2a gegenüber der Spur 1 angeordnet. Hierdurch ist es möglich, zwei um 90 Grad gegeneinander versetzte Signale an den Detektoren 4,5 zu erzeugen, wie dies in Fig. 2 durch die beiden oberen Signalverläufe dargestellt ist. Eines der Signale weist bei Drehrichtungsumkehr einen Phasensprung von 180 Grad auf, wodurch die Drehrichtung eindeutig erfasst werden kann. Aus messtechnischen Gründen sind die Flanken der Codespur am Ausgang des Detektors 6 gegenüber den Flanken der beiden Inkrementalspuren (Detektor 4 und 5) um den Winkel a verschoben.

Aus Fig. 3 ist ersichtlich, dass die Zähne 9 der Codespur (Detektor 6) in ihrer Länge voneinander abweichen. Dabei kommt über den gesamten Verlauf der Spur 2 jede Zahnbreite nur ein einziges Mal vor, so dass aufgrund der Zahnbreite eine Aussage über den Absolutwert der Stellung der Spur gegenüber den ortsfesten Detektoren gemacht werden kann. Die Stellung der Codespur ist, wie weiter oben schon erläutert, ein Maß für die Winkelstellung der Räder bzw. des Lenkwinkels. Da hauptsächlich und insbesondere bei großen Geschwindigkeiten die um den Wert von 0 Grad liegenden Lenkwinkel benötigt werden, sind dort die Zahnbreiten der Spur 2 am kleinsten, so dass hier vergleichsweise schnell eine Aussage über den Absolutwert des Lenkwinkels gemacht werden kann.

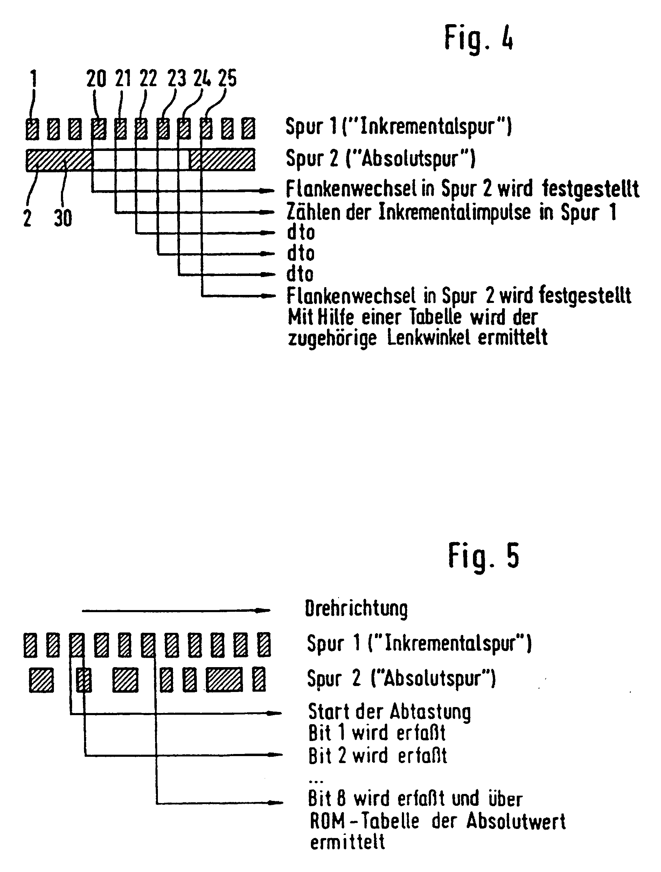

Fig. 4 beschreibt, wie die Breiten der einzelnen Zähne auf der Codespur 2 vermessen werden können. Wie aus Fig. 4 ersichtlich, wird beispielsweise zu Beginn eines Zahns 20 festgestellt, dass das Ende eines Zahns 30 erreicht ist und ein Flankenwechsel auftritt. Anschließend wird beim Passieren der Zähne 21,22,23 und 24 kein Flankenwechsel festgestellt. Erst beim Auftreten des Zahns 25 auf der Inkrementalspur 1 wird ein Flankenwechsel der Codespur 2 festgestellt. Es lässt sich somit die Aussage machen, dass der Zahn bzw. die zugehörigen Lücke auf der Codespur größer als die Dauer von vier Zähnen auf der Inkrementalspur sein muss. Theoretisch kann aber der vermessene Codezahn auch fast sechs inkrementale Zähne breit sein.

Nachdem die Länge des betreffenden Zahns auf der Codespur unter Berücksichtigung der Toleranzen festgelegt wurde, wird das Ergebnis einer in der Zeichnung nicht dargestellten Tabelle zugeführt, aus der dann der Absolutwert des Lenkwinkels entnommen werden kann. In Fig. 3 sind die verschiedenen Breiten der Zähne bzw. Lücken auf der Codespur 2 aufgeführt. Bei dem Ausführungsbeispiel nach Fig. 3 besitzt die Codespur 2 neun Zähne, während die Inkrementalspur 180 Zähne aufweist. Die Tabelle kann eine ROM-Tabelle im auswertenden Mikroprozessor des Sensors sein.

Es zeigt sich somit, dass durch die Verwendung des zweiten Sensors 5 in Verbindung mit der Informationsspur 2 schon nach einer maximalen Drehbewegung von < 30 Grad der durchlaufende Sektor bestimmt werden kann, wodurch die Absolutwerte des Lenkwinkels sehr früh angegeben werden können.

Die Funktionsweise ist also wie folgt: Nach der Einschaltung der Zündung werden die inkrementalen Impulse gezählt und die Drehrichtung wird ermittelt. Zusätzlich wird die Hell-Dunkel-Strecke der weiteren Informationsspur mit Hilfe von Impulsfolgen auf der Spur 1 vermessen und anhand der Länge der gemessenen Hell-Dunkel-Strecke der absolute Winkelwert gewonnen. Somit steht ein genauer absoluter Lenkwinkel nach sehr kurzer Zeit nach "Zündung ein" zur Verfügung, die Auswertung wird in das sogenannte ECU, also den zugeschalteten Mikroprozessor, verlagert.

Hinsichtlich der Genauigkeit der Messung ist zu sagen, dass im Bereich der Null Grad-Stellung des Lenkrades die kürzestmöglichen Abschnitte der Codespur (Spur 2) angeordnet sind. In diesem Bereich erfolgt die schnellste Synchronisation und der kleinstmögliche Absolutfehler. Die maximal mögliche Lenkradbewegung ohne eindeutige Aussage über den momentanen absoluten Lenkwinkel beträgt 30 Grad. Durch entsprechende Software-Algorithmen kann jedoch schon vorher eine Abschätzung über den möglichen absoluten Lenkwinkel ermittelt werden.

Die in dem ersten Ausführungsbeispiel vorgeschlagene Codefolge besteht aus folgenden Hell-Dunkel-Folgen: 36, 27, 34, 53, 26, 45, 23, 43, 15, 17, 22, 41, 16, 13, 31, 33, 62, 51, 21, 42, 14, 44, 24, 12, 25, 54, 32, 35. In dieser Zahlenreihe kommt jedes Zahlenpaar nur einmal vor. Somit ist eine eindeutige Zuordnung von Zahlenfolge und Winkelposition sowohl bei Rechts-Linkslauf als auch bei Überschreiten einer kompletten Hell-Dunkel- oder Dunkel-Hell-Phase möglich.

Wie weiter unten noch beschrieben wird, kann durch eine PWM-Codierung (Pulsweitenmodulation-Codierung) am Umfang der Infospur erreicht werden, dass die Mindestdrehbewegung zur Bestimmung des Sektors konstant bleibt. Dies wird anhand eines zweiten Ausführungsbeispiels erläutert.

Nachfolgend wird ein zweites Ausführungsbeispiel anhand von Fig. 5 beschrieben. Dieses Ausführungsbeispiel zeichnet sich dadurch aus, dass die Mindestdrehbewegung zur Bestimmung des jeweiligen Absolutwinkels konstant bleibt. Dabei wird im Prinzip eine bestimmte Anzahl von Zähnen auf der Spur 1 vorgegeben, wobei während des Passierens dieser Zähne auf der ersten Spur die Hell-Dunkel-Änderungen auf der Codespur 2 ausgewertet werden (Absolutspur). Der Hell-Dunkel-Verlauf auf der Codespur entspricht somit einer bestimmten Codierung. Anders ausgedrückt: Es wird während jedes Passierens eines Zahns auf der ersten Spur festgestellt, ob die Spur 2 gerade hell oder dunkel ist. Hell wird dabei der Digitalwert 1 und dunkel der Digitalwert 0 zugeordnet. Auf diese Weise ergibt sich eine 8 Bit lange codierte Zahl, die für den augenblicklich geltenden Absolutwert des Lenkwinkels steht. Durch Auswahl geeigneter Digitalzahlen kann man erzwingen, dass unabhängig davon, bei welchem Zahn auf der Inkrementalspur man mit der Auswertung der zugehörigen digitalen Zahl (8 Bit lang) auf der Spur 2 beginnt, sich immer eine andere Digitalzahl ergibt. Mit dieser digitalen Zahl kann in dem schon erwähnten ROM-Speicher der Absolutwert des Lenkwinkels entnommen werden, der nach der Auswertung der Zahl erreicht ist. Es werden somit nach Einschalten der Zündung die inkrementalen Impulse gezählt und es wird die Drehrichtung ermittelt. Zusätzlich werden die Hell-Dunkel-Wechsel auf der Codespur 2 erfasst und über ROM-Tabellen im auswertenden Mikroprozessor decodiert, wodurch der Absolutwert des Lenkwinkels festgestellt wird. Auch hier steht somit ein genauer absoluter Lenkwinkel kurz nach dem Einschalten der Zündung zur Verfügung. Während des laufenden Betriebes wird am Ende einer Synchronisation über die Anzahl der Inkremente der Lenkwinkel ermittelt und zusätzlich mit der Information der Absolutspur ständig verifiziert. Der Sensor ist also in gewisser Weise redundant bzw. eigensicher. Nach 16 Grad Lenkradbewegung liegt immer ein eindeutiger absoluter Lenkwinkel fest. Als Codefolge wird mit Vorteil eine sogenannte Maximalfolge gewählt. Die Auflösung beträgt 8 Bit. Eine komplette Folge besteht aus 180 Bits, wobei jeweils 8 aufeinanderfolgende Bits auf den Gesamtumfang nur einmal vorkommen. Eine weitere Erhöhung der Genauigkeit lässt sich durch Verwendung eines zweiten Detektors auf der Informationsspur erreichen. Das gilt für beide Ausführungsbeispiele. Bei beiden Ausführungsbeispielen kann somit auch eine Ruhestromversorgung entfallen und es sind sowohl optische als auch magnetische Detektoreinheiten möglich.

## Patentansprüche

1. Lenkwinkelsensor zur Bestimmung des Absolutwertes eines Lenkwinkels, mit einer ersten Spur (1) mit äquidistanten Zähnen, über die die Größe einer relativen Winkelbewegung feststellbar ist, und mit einer zweiten Spur (2), welche zur Bestimmung der absoluten Winkelstellung des Lenkrades dient, und die zweite Spur (2) in ihrer Breite voneinander abweichende Zähne aufweist und jeder Zahn mit einer bestimmten Zahnbreite nur ein einziges Mal vorkommt, wobei die beiden gegenüber einem Rahmen drehbaren Spuren (1 und 2) dem Lenkrad, dessen Absolutwert der Drehwinkelstellung festgestellt werden soll, räumlich fest zugeordnet sind, **dadurch gekennzeichnet, dass** bei der zweiten Spur (2) die Zähne mit den kleinsten Zahnbreiten beidseits um den Nullpunkt des Lenkrades angeordnet sind.

2. Lenkwinkelsensor nach Anspruch 1, **dadurch gekennzeichnet, dass** zur Messung der relativen Winkelbewegung der ersten Spur (1) zwei im Rahmen fest verankerte Detektoren (4, 5) vorgesehen sind, die im Abstand von 90 Grad der Zahn-Lücke-Periode von 360 Grad angeordnet sind und die Detektoren (4, 5) 90 Grad gegeneinander versetzte Züge von Impulsen abgeben.

3. Lenkwinkelsensor nach einem der vorangegangenen Ansprüche, **dadurch gekennzeichnet, dass** ein dritter Detektor (6) vorgesehen ist, welcher die zweite Spur (2) abtastet.

4. Lenkwinkelsensor nach einem der vorangegangenen Ansprüche, **dadurch gekennzeichnet, dass** ein vierter Detektor vorgesehen ist, welcher die zweite Spur (2) abtastet.

5. Lenkwinkelsensor nach einem der Ansprüche 2 bis 4, **dadurch gekennzeichnet, dass** eine Auswerteeinrichtung des Sensors die Zahl der Flanken eines oder beider Impulszüge (20 bis 25) zählt, die zwischen zwei gemessenen Flanken der zweiten Spur (2) von den Detektoren (4, 5) der ersten Spur (1) abgegeben wurden (Fig. 4).

6. Lenkwinkelsensor nach Anspruch 5, **dadurch gekennzeichnet, dass** die Zahl der gemessenen Flanken (20 bis 25) einer Tabelle als Eingangssignal angeboten wird und dass das korrespondierende Ausgangssignal der Tabelle den Absolutwert des Lenkwinkels angibt.

7. Lenkwinkelsensor nach Anspruch 5 oder 6, **dadurch gekennzeichnet, dass** die wachsenden Absolutwerte des Lenkwinkels zugeordneten Flankenabstände der zweiten Spur (2) ebenfalls größer werden.

8. Lenkwinkelsensor nach einem der vorhergehenden Ansprüche, **dadurch gekennzeichnet, dass** eine Auswerteeinrichtung vorgesehen ist, die über eine vorgegebene Anzahl von Flanken eines oder beider Impulszüge der ersten Spur (1) hinweg jeweils den gleichzeitig auftretenden Amplitudenwert der zweiten Spur (2) feststellt und diesem so festgestellten codierten Bitmuster der zweiten Spur (2) der Absolutwert des Lenkwinkels zugeordnet ist.

9. Lenkwinkelsensor nach Anspruch 8, **dadurch gekennzeichnet, dass** das Bitmuster als Eingangssignal einer Tabelle angeboten wird, die als Ausgangssignal ein den Absolutwert des Lenkwinkels entsprechendes Signal vorzugsweise in Form eines Digitalwertes abgibt.

10. Lenkwinkelsensor nach Anspruch 8 oder 9, **dadurch gekennzeichnet, dass** jeder der aus einer vorgegebenen Anzahl von Bits bestehenden, auf der zweiten Spur (2) ablesbaren Code-Werte sich von den auf der zweiten Spur (2) ablesbaren restlichen Code-Werten unterscheidet.

11. Lenkwinkelsensor nach einem der Ansprüche 8 bis 10, **dadurch gekennzeichnet, dass** über zwei Zahnperioden der ersten Spur (1) 8 Bit eines 8 Bit-Codes auf der zweiten Spur (2) zugeordnet sind.

12. Lenkwinkelsensor nach einem der vorangegangenen Ansprüche, **dadurch gekennzeichnet, dass** die erste und die zweite Spur (1, 2) in sich geschlossene, konzentrisch angeordnete kreisförmige und mit rechteckförmigen Zähnen versehene Ringe sind, die mit ihrer den Zähnen abgewandten Kante auf einer Bodenplatte befestigt sind.

## Claims

1. A steering angle sensor for determination of an absolute value of a steering angle, with a first track (1) having equidistant teeth for determining the value of a relative angular movement, with a second track (2) for determining the absolute angular position of the steering wheel, and every tooth with a specific width appears only once, the two tracks (1 and 2) rotatable in relation to a frame are allocated to the steering wheel, which absolute value of the steering angle has to be determined, **characterized in that** at the second track(2)the teeth with the smallest width are located on both sides of the zero point of the steering wheel.

2. A steering angle sensor according to claim 1, **characterized in that** for measuring the relative angle movement of the first track (1) two detectors (4, 5) are provided which are anchored firmly to the frame, the two detectors are arranged in a distance of 90 degree of the tooth-gap-period of 360 degree and the detectors (4, 5) deliver sequences of pulses which are offset by 90 degrees.

3. A steering angle sensor according to one of the preceding claims, **characterized in that** a third detector (6) is provided which scans the second track (2).

4. A steering angle sensor according to one of the preceding claims, **characterized in that** a fourth detector is provided which scans the second track (2).

5. A steering angle sensor according to one of claims 2 to 4, **characterized in that** a sensor analyzing device counts the number of flanks of at least one of the pulse sequences (20 to 25) emitted by the detectors (4, 5) of the first track (1) between two measured flanks of the second track (2).

6. A steering angle sensor according to claim 5, **characterized in that** the number of measured flanks (20 to 25) is made available to a table as an input signal and wherein the table provides an output signal corresponding to the absolute value of the steering angle.

7. A steering angle sensor according to claim 5 or 6, **characterized in that** the flank distances of the second tack (2) assigned to increasing absolute values of the steering angle increase as well.

8. A steering angle sensor according to one of the preceding claims, **characterized in that** a sensor analyzing device is provided, which determines a simultaneously occurring amplitude value of the second track (2) by means of a predetermined number of flanks of one or both pulse sequences of the first track (1), and that the absolute value of the steering angle is assigned to that determined coded bit map of the second track (2).

9. A steering angle sensor according to claim 8, **characterized in that** the bit map is made available to a table as an input signal, which issues an output signal that corresponds to the absolute value of a steering angle preferably in form of a digital value.

10. A steering angle sensor according to claim 8 or 9, **characterized in that** each of the code values consists of a predetermined number of bits and is arranged on the second track (2) and differs from the remaining code values arranged on the second track (2).

11. A steering angle sensor according to one of claims 8 to 10, **characterized in that** 8 bits of an 8-bit code are distributed on the second track (2) over two tooth periods of the first track (1).

12. A steering angle sensor according to one of the preceding claims, **characterized in that** the first and the second track (1, 2) are closed concentric arranged circular rings having rectangular teeth, which are attached to a base plate with its side opposite to the teeth.

## Revendications

1. Capteur d'angle de braquage destiné à déterminer la valeur absolue d'un angle de braquage, comprenant une première piste (1) avec des dents équidistantes, par l'intermédiaire de laquelle peut être déterminée la grandeur d'un mouvement angulaire relatif, et comprenant une seconde piste (2) qui sert à la détermination de la position angulaire absolue du volant de direction, et la seconde piste (2) présentant des dents différentes les unes des autres quant à leur largeur, chaque dent avec une largeur de dent déterminée n'intervenant ou ne survenant qu'une seule fois, les deux pistes (1 et 2) rotatives par rapport à un cadre étant associées de manière fixe dans l'espace au volant de direction dont la valeur absolue de la position angulaire de rotation doit être déterminée,
**caractérisé en ce que** sur la seconde piste (2), les dents présentant les largeurs de dent les plus petites sont disposées de part et d'autre du point neutre ou nul du volant de direction.

2. Capteur d'angle de braquage selon la revendication 1, **caractérisé en ce que** pour mesurer le mouvement angulaire relatif de la première piste (1), sont prévus deux détecteurs (4, 5) ancrés de manière fixe dans le cadre et disposés selon un espacement de 90 degrés de la période dent - entredent de 360 degrés, et les détecteurs (4, 5) délivrent des trains d'impulsions décalés mutuellement de 90 degrés.

3. Capteur d'angle de braquage selon l'une des revendications précédentes, **caractérisé en ce qu'**il est prévu un troisième détecteur (6) qui explore la seconde piste (2).

4. Capteur d'angle de braquage selon l'une des revendications précédentes, **caractérisé en ce qu'**il est prévu un quatrième détecteur qui explore la seconde piste (2).

5. Capteur d'angle de braquage selon l'une des revendications 2 à 4, **caractérisé en ce qu'**un dispositif de traitement du détecteur, compte le nombre de flancs de l'un ou des deux trains d'impulsions (20 à 25), qui ont été délivrés entre deux flancs mesurés de la seconde piste (2) par les détecteurs (4, 5) de la première piste (1) (figure 4).

6. Capteur d'angle de braquage selon la revendication 5, **caractérisé en ce que** le nombre des flancs mesurés (20 à 25) est délivré à un tableau en tant que signal d'entrée, et **en ce que** le signal de sortie correspondant du tableau indique la valeur absolue de l'angle de braquage.

7. Capteur d'angle de braquage selon la revendication 5 ou 6, **caractérisé en ce que** les écarts de flancs de la seconde piste (2), associés à des valeurs absolues croissantes de l'angle de braquage, deviennent également plus grands.

8. Capteur d'angle de braquage selon l'une des revendications précédentes, **caractérisé en ce qu'**il est prévu un dispositif de traitement qui détermine la valeur d'amplitude de la seconde piste (2) apparaissant simultanément pendant un nombre prescrit de flancs de l'un ou des deux trains d'impulsions de la première piste (1), et à ce profil binaire ou de bits codé de la seconde piste (2) ainsi déterminé est associé la valeur absolue de l'angle de braquage.

9. Capteur d'angle de braquage selon la revendication 8, **caractérisé en ce que** le profil binaire ou de bits est fourni en tant que signal d'entrée à un tableau, qui délivre en tant que signal de sortie, un signal correspondant à la valeur absolue de l'angle de braquage, de préférence sous la forme d'une valeur numérique.

10. Capteur d'angle de braquage selon la revendication 8 ou 9, **caractérisé en ce que** chacune des valeurs de code pouvant être lue sur la seconde piste (2) et constituée d'un nombre prescrit de bits, se distingue des valeurs de code restantes pouvant être lues sur la seconde piste (2).

11. Capteur d'angle de braquage selon l'une des revendications 8 à 10, **caractérisé en ce que** sur deux périodes de dents de la première piste (1) sont affectés 8 bits d'un code à 8 bits sur la seconde piste (2).

12. Capteur d'angle de braquage selon l'une des revendications précédentes, **caractérisé en ce que** la première et la seconde piste (1, 2) sont des anneaux fermés en soi, de forme circulaire, disposés concentriquement l'un par rapport à l'autre et comportant des dents rectangulaires, ces anneaux étant fixés sur une plaque de base par leur bord opposé à celui des dents.
